# EUROPEAN PATENT APPLICATION

(11) **EP 3 670 931 A1**
(43) Date of publication of application: **24.06.2020**
(21) Application number: 18213210.0
(22) Date of filing: 17.12.2018
(51) Int. Cl.: F15B 20/00, B60P 1/16

(54) **A HYDRAULIC CONTROL SYSTEM**

(71) Applicant: Hyva Holding BV, 2408 AK Alphen aan den Rijn (NL)
(72) Inventor: BIEMOND, Jacob, 2411 LH Bodegraven (NL); BALDACCHINO, Daniel, 2465 JG Delfgauw (NL); AERTS, Wouter Frederik, 2012 DL Haarlem (NL)
(74) Representative: Haseltine Lake Kempner LLP

(57) **Abstract**

There is disclosed a hydraulic control system for controlling an actuator in a hydraulic circuit on a tipper truck, the hydraulic control system comprising a valve for selectively allowing introduction of hydraulic fluid to the actuator from at least a portion of the hydraulic circuit, and to selectively allow discharge of hydraulic fluid from the actuator into the portion of the hydraulic circuit. It comprises a sensor configured to generate a pressure parameter indicative of the pressure in the hydraulic circuit and a controller configured to receive the pressure parameter from the sensor. The controller is configured to actively control the valve to regulate the flow of hydraulic fluid through the valve in the hydraulic circuit when the pressure parameter exceeds a pressure threshold. There is also disclosed a hydraulic circuit having the hydraulic control system, and a tipper truck having the hydraulic circuit.

## Description

The present invention relates to a hydraulic control system for controlling an actuator on a tipper truck, a hydraulic circuit comprising the hydraulic control system, and a tipper truck having the hydraulic circuit.

Tipper trucks are typically fitted with hydraulic cylinders for pivoting a bed from a resting position to a raised position. Extension of the hydraulic cylinder generally corresponds to raising of the bed towards the raised position, and retraction of the hydraulic cylinder generally corresponding to lowering of the bed towards the resting position. These hydraulic cylinders are fitted with a main, operator controlled valve for introducing and discharging hydraulic fluid to and from the hydraulic cylinder in normal use. A hydraulic circuit connected to the hydraulic cylinder also comprises pressure relief valves as a safety precaution to ensure that pressure in the hydraulic cylinder does not exceed a maximum safe pressure. The pressure relief valve typically comprises a poppet located in a seat, and which is biased against the seat by a spring. When the pressure in the hydraulic cylinder is high enough to overcome the biasing force of the spring, the poppet is pushed off the seat, to open the pressure relief valve, to relieve pressure in the hydraulic cylinder.

According to an aspect, there is provided a hydraulic control system for controlling an actuator in a hydraulic circuit on a tipper truck, the hydraulic control system comprising: a valve for selectively allowing introduction of hydraulic fluid to the actuator from at least a portion of the hydraulic circuit, and to selectively allow discharge of hydraulic fluid from the actuator into the portion of the hydraulic circuit; a sensor configured to generate a pressure parameter indicative of the pressure in the hydraulic circuit, and a controller configured to receive the pressure parameter from the sensor, and to actively control the valve to regulate the flow of hydraulic fluid through the valve in the hydraulic circuit when the pressure parameter exceeds a pressure threshold.

In other words, the valve is a main valve for allowing fluid flow to or from a portion of the hydraulic circuit. This may reduce the dependency of the control system on manual input for controlling the flow in the hydraulic circuit, and may mean that a separate pressure relief valve is not required in the portion of the hydraulic circuit.

The sensor may be configured to generate the pressure parameter at a location remote from the valve.

The hydraulic circuit may comprise a tank and a pump which draws fluid from the tank. The controller may be configured to move the valve between an extending position in which fluid can be actively pumped from the pump to the actuator, a neutral position in which the valve permits fluid to be pumped directly to the tank, and does not permit fluid flow to the actuator, or between the actuator and the tank, and a retracting position in which the valve permits passive discharge of fluid from the actuator to the tank, and permits pumping of fluid directly to the tank.

The sensor may be disposed in the actuator to generate a pressure parameter indicative of pressure in the actuator. The location of the monitored parameters can be chosen to reflect safety requirements, such as overpressure protection, and performance control and optimisation.

The hydraulic control system may comprise more than one sensor. Each sensor may be configured to determine a pressure parameter related to the pressure in the hydraulic circuit, wherein the controller is configured to receive a pressure parameter from any or each sensor.

The controller may be configured to compare the pressure parameter from any or each sensor with a respective pressure threshold, and to regulate the flow of hydraulic fluid through the valve when any one of the pressure parameters from any or each sensor exceeds its respective pressure threshold.

The sensor may be a pressure sensor. The sensor may be a flow rate sensor. The sensor may be a temperature sensor. The sensor may be a mechanical vibrations sensor or a sound emissions sensor.

The controller may be configured to move the valve to a neutral position when it is determined that the pressure threshold is exceeded. The neutral position may be a position in which fluid can neither be introduced into nor discharged from the actuator. The controller may be configured to allow discharge of fluid from the actuator through the valve when it is determined that the pressure threshold is exceeded.

The pressure threshold may correspond to a maximum pressure in the hydraulic circuit. The pressure threshold may correspond to an expected pressure in the hydraulic circuit. The pressure threshold may correspond to a maximum rate of change of pressure in the hydraulic circuit.

According to a second aspect, there is provided a hydraulic circuit comprising the hydraulic control system in accordance with the first aspect.

According to a third aspect, there is provided a tipper truck having a hydraulic circuit in accordance with the second aspect.

Embodiments of the invention will now be described, by way of example only, with reference to the accompanying drawings, in which:
Figure 1 schematically shows a perspective view of a tipper truck;
Figure 2 schematically shows a hydraulic circuit in a tipper truck;
Figures 3A-3C schematically show a valve for use in the hydraulic circuit in a neutral position, a first position and a second position respectively.

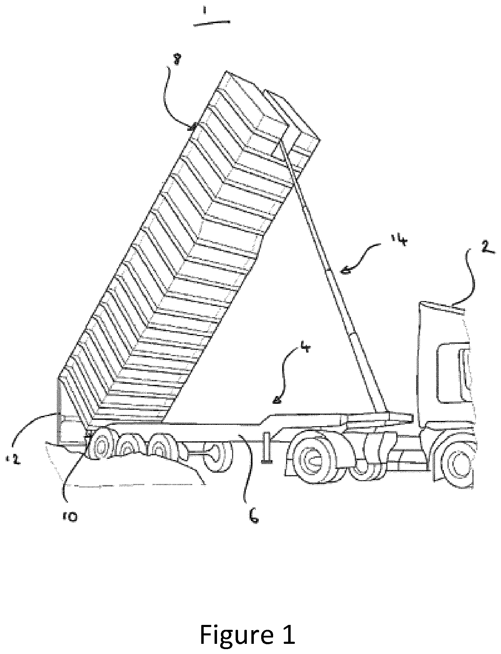

**Figure 1** shows an example tipper truck 1, sometimes referred to as a dump truck, comprising a tractor 2 and a trailer 4. The trailer 4 has a trailer chassis or frame 6, and a tipper body 8 is pivotably mounted thereto. The tipper body 8 is pivotably mounted to the chassis 6 about a transverse axis 10 that is located at the rear of the chassis 6. The tipper body 8 is in the form of a cuboidal container having an open top. A rear panel (or door) 12 of the tipper body 8 is hinged at its upper edge and can be locked and unlocked such that it can be opened to allow the contents of the tipper body 8 to be emptied. An actuator 14 in the form of a hydraulic cylinder 14 is provided that is pivotably attached at a lower end to the front of the chassis 6 and pivotably attached an upper end to the front of the tipper body 8. The hydraulic cylinder 14 can be extended (as shown in Figure 1) to pivot and raise the tipper body 8 about the axis 10 to a tipped position in which, with the rear panel 12 unlocked, any load within the tipper body 8 is emptied onto the ground. The cylinder 14 can be retracted so as to pivot and lower the tipper body 8 back to a resting position in which it rests on the chassis 6.

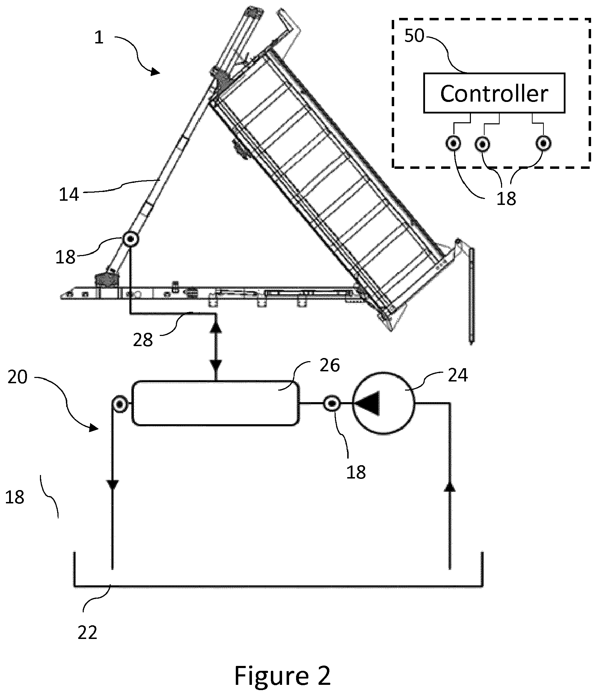

**Figure 2** shows a hydraulic circuit 20 for the tipper truck 1 which is configured to selectively extend and retract the hydraulic cylinder 14 of the tipper truck 1 in a raising (or extending) and lowering (or retracting) operation respectively.

The hydraulic circuit 20 comprises a reservoir 22 for holding fluid, and a pump 24 for drawing hydraulic fluid from the tank 22 and pumping the fluid around the hydraulic circuit 20. The direction of fluid flow in use is shown by arrows around the hydraulic circuit 20. The hydraulic circuit 20 comprises a main valve 26 which is located downstream of the pump 24 so that the pump 24 is configured to pump hydraulic fluid through the valve 26 in use.

The hydraulic circuit 20 further comprises the actuator 14 (i.e. the hydraulic cylinder) of the tipper truck 1, which is fluidically connected to the valve 26 through an actuator channel 28. In other examples, the valve may be located directly on the actuator or it may be a part of the actuator. The actuator 14 is configured to receive and discharge fluid through the actuator channel 28 to extend or retract the hydraulic cylinder so as to raise or lower the tipper body 8 respectively. Arrows pointing in opposing directions on the actuator channel 28 illustrate that hydraulic fluid may flow in either direction along the actuator channel 28.

The valve 26 is configured to selectively allow hydraulic fluid from the pump 24 either to be directly introduced into the actuator 14, or directly discharged to the tank 22, and to selectively allow hydraulic fluid to be discharged from the actuator 14 into the tank 22. Therefore, controlling the valve 26 in use allows control of whether hydraulic fluid is introduced into the actuator 14 from the pump 24 (extending operation), whether the actuator 14 is isolated so that hydraulic fluid can neither be introduced into nor discharged from the actuator 14 (neutral operation), or whether the hydraulic fluid in the actuator is discharged to the tank (retracting operation).

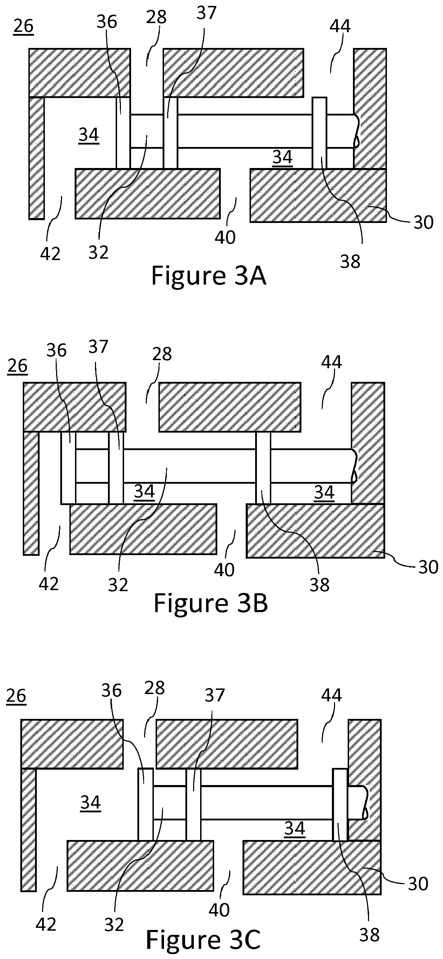

**Figures 3A-C** show a cross-sectional view of the valve 26 of the hydraulic circuit 20 in the neutral operation, extending operation and retracting operation respectively. The valve 26 comprises a housing 30 defining a longitudinal valve channel 34. The valve housing 30 defines a pump inlet channel 40, the actuator channel 28, and a first and second tank channel 42, 44, each of which extend from the valve channel 34. In the hydraulic circuit 20 of Figure 2, the pump inlet channel 40 of the valve 26 is directly connected to the pump 24 downstream of the pump 24, the actuator channel 28 is directly connected to the actuator 14, and the first and second tank channels 42 and 44 are directly connected to the tank 22.

The actuator channel 28 and second tank channel 44 are located in the valve housing 30 on the same side. The pump inlet channel 40 and the first tank channel 42 are located in the valve housing 30 on an opposing side of the valve channel 34 to the actuator channel 28 and second tank channel 44. In other examples, the channels may extend from any part of the valve channel 34 and may be located in any suitable part of the valve housing 30. The first tank channel 42, the actuator channel 28, the pump inlet channel 40 and the second outlet channel 44 are arranged along the longitudinal extent of valve channel 34 in that order from left to right in Figures 3A-3C. It should be appreciated that when looking at the cross-section of the valve 26 from an opposing side, the channels would appear in that order from right to left.

In this example, the valve 26 is a linear-motion valve having a spool 32 which is provided in the valve channel 34 and which comprises a rod aligned with the longitudinal valve housing 30. The spool 32 further comprises a first, second and third separator 36, 37, 38 along the length of the rod. The separators 36, 37, 38 are fixed to the rod and distributed along the length of the valve channel 34 to cooperate with the wall of the housing 30 defining the valve channel 34 in the manner of a piston i.e. to fluidically separate the valve channel 34 so as to prevent fluid from moving from one side of the separator to the other side of the same separator.

In other examples, the channels are arranged within the valve housing in any suitable order such that the pump inlet channel can be selectively fluidically disconnected from the first and second tank channel and the actuator channel by respective separators, and so that the actuator channel can also be selectively fluidically disconnected from the first and second tank channels.

The spool 32 of the valve 26 is linearly movable in both directions along the longitudinal extent of the valve housing 30, from an extending position, to a neutral position, and to a retracting position which correspond to an extending operation, a neutral operation and a retracting operation respectively. These positions will be described in more detail below.

Figure 3A shows the valve 26 in a neutral position. In this position, the third separator 38 is positioned so that the pump inlet channel 40 and second tank channel 44 are fluidically connected. The second separator 37 is positioned between the pump inlet channel 40 and the actuator channel 28 so as to separate the actuator channel 28 from the pump inlet channel 40 and the second tank channel 44. The first separator 36 is positioned between the actuator channel 28 and the first tank channel 42 so as to separate the actuator channel 28 from the first tank channel 42. The spool 32 in this position is configured to be linearly moveable in either direction (shown as left or right from the neutral position) to the extending position or the retracting position.

Therefore, in use, hydraulic fluid directed through the pump inlet channel 40 from the pump 24 is discharged directly into the tank 22, the second separator 37 prevents hydraulic fluid from the pump inlet channel 40 from being introduced into the actuator 14, and the first separator 36 prevents hydraulic fluid in the actuator 14 from being discharged to the tank 22. As such, the actuator 14 is neither extended nor retracted (i.e. it remains in the same position).

Figure 3B shows the valve in a fully extending position in which the spool 32 of the valve 26 is located to the left of the neutral position within the valve channel 34. It should be appreciated that looking at the valve 26 from an opposing side would show the spool 32 to the right of the neutral position.

In this position, the third separator 38 separates the pump inlet channel 40 from the second tank channel 44. The second separator 37 is positioned so that the pump inlet channel 40 and actuator channel 28 are fluidically connected. The first and second separator 36 and 37 both separate the first tank channel 42 and the actuator channel 28. In other examples, it may be only the first separator 36 which separates the first tank channel 42 and the actuator channel 28.

Therefore, in use, the hydraulic fluid directed to the valve 26 through the pump inlet channel 40 is pumped into the actuator 14 via the actuator channel 28.

Figure 3C shows the valve in a fully retracting position in which the spool 32 of the valve 26 is located to the right of the neutral position (shown in Figure 3A) within the valve channel 34. It should be appreciated that looking at valve 26 from an opposing side would show the spool 32 to the left of the neutral position.

In this position, the third separator 38 is positioned so that the pump inlet channel 40 and second tank channel 44 are fluidically connected. The second separator 37 separates the pump inlet channel 40 from the actuator channel 28, and the first separator 36 is positioned so that the actuator channel 28 and the first tank channel 42 are fluidically connected.

Therefore, in use, the hydraulic fluid pumped into the valve 26 from the pump 24 is discharged directly to the tank 22 and hydraulic fluid in the actuator 14 is allowed to passively discharge to the tank 22 to lower the actuator 14. The weight of the tipper body, if raised, may assist or encourage hydraulic fluid out of the actuator 14 in this position. In other examples, the hydraulic fluid may be actively discharged from the actuator when the valve is in the retracting position. The hydraulic fluid may be actively discharged by means of a pump which pumps fluid out of the actuator and into the valve.

The valve 26 may be moved to intermediate extending positions between the fully extending position and neutral position, and to intermediate retracting positions between the fully retracting position and neutral position.

In intermediate extending positions, the spool 32 is positioned within the valve channel 34 so that the separators 36, 37, 38 provide the same functions as they do in the fully extending position. However, the aperture through which the hydraulic fluid can enter the actuator channel 28 may be smaller, so that, for the same pumping power, the actuator is extended more slowly. In other examples, the speed of extension of the actuator may be controlled by regulating the power of the pump. This may allow fine control of the speed of extending the actuator 14, with the maximum speed for the same pumping power corresponding to when the valve is in the fully extending position (Figure 3B).

In the intermediate retracting positions, the spool 32 is positioned within the valve channel 34 so that the separators 36, 37, 38 provide the same functions as they do in the fully retracting position. The aperture through which the hydraulic fluid from the actuator 14 can be discharged may be smaller than in the fully retracting position, so that the discharge of hydraulic fluid is slower, and therefore the actuator 14 is lowered more slowly. This may allow fine control of the speed of lowering the actuator 14, with the maximum speed corresponding to when the valve is in the fully retracting position (Figure 3C).

Referring back to Figure 2, the hydraulic circuit 20 comprises sensors 18 at various locations for monitoring conditions in the hydraulic circuit 20. The sensors 18 are configured to generate a pressure parameter indicative of the pressure in the hydraulic circuit 20 at the location of the sensor 18. In this example, the sensors 18 are pressure sensors. In other examples, the sensors may be temperature sensors, flow rate sensors, mechanical vibrations sensors or sound emissions sensors for generating a parameter indicative of pressure in the hydraulic circuit. In some examples, some of the sensors may be pressure sensors, whilst others are temperature, flow rate, mechanical vibrations or sound emissions sensors. A combination of sensors may be used around the hydraulic circuit to ensure robust monitoring of pressure and/or flow in the hydraulic circuit.

In this example, one pressure sensor 18 is located in the actuator 14 to generate a pressure parameter indicative of pressure in the actuator 14, one pressure sensor 18 is located between the pump 24 and the valve 26 and one pressure sensor 18 is located downstream of the valve 26 towards the tank 22. In other words, the sensors 18 are located remotely from the valve 26. In some examples, there may be sensors provided within the valve.

The hydraulic circuit 20 further comprises a controller 50 which is configured to control the valve 26 to regulate the flow of hydraulic fluid through the valve 26 by controlling the position of the spool 32 in the valve 26. The controller 50 is configured to control the valve to commence extending, retracting or neutral operations in order to control the actuator in response to external user commands.

The controller 50 also receives the pressure parameters from each of the sensors 18 and may control the valve 26 based partly on the received pressure. In this example, the pressure parameters are transmitted from the sensors 18 to the controller 50 via a wireless network. In other examples, the sensors 18 may be connected to the controller with a physical link so that the pressure parameters may be transmitted to the controller through a wired network.

The controller 50 is configured to compare the received pressure parameters from each sensor 18 to a respective pressure threshold. For example, there may be a set pressure threshold beyond which the system cannot safely support the pressure (e.g. a dangerous pressure threshold which indicates a dangerous condition of the cylinder). Therefore, if the pressure exceeds this dangerous pressure threshold, it may be determined by the controller that the system is in a dangerous condition. Alternatively, or additionally, there may be a predetermined pressure threshold which corresponds to an expected pressure, such as a pressure profile which defines expected pressure at a given extension of the cylinder. Therefore, if the pressure at any one of the sensors exceeds the expected pressure at a given cylinder extension, then this may be indicative of a different fault, such as a blockage or constriction.

The controller 50 is configured to control the spool 32 to regulate the flow of hydraulic fluid through the valve 26 when a dangerous condition is detected and/or when a different fault is detected. The controller 50 is configured to override any external user commands.

In this example, the pressure threshold relates to a maximum pressure which can be safely supported in the hydraulic circuit 20 (i.e. the dangerous condition). For example, the pressure threshold for the sensor in the actuator 14 relates to the maximum pressure which can be supported by the actuator 14 or the pump, and the pressure threshold for the sensor between the pump 24 and the valve 26 is the maximum pressure which can be supported in the line downstream of the pump 24. When any of the pressure parameters, such as the pressure parameter from the sensor 18 in the actuator 14, exceed their respective pressure threshold, this indicates a dangerous condition.

In other examples, where the sensors are, for example, flow rate sensors, a pressure parameter is generated which is *indicative* of pressure. For example, at the end of stroke of a hydraulic cylinder, the flow rate drops and the pressure peaks. This sudden drop in the flow rate can therefore be used to infer a peak in the pressure. Therefore, the flow rate sensor can be used to generate a pressure parameter by inferring pressure, such that when the pressure parameter (as inferred from measurements of the flow rate sensors) exceeds the pressure threshold, this may indicate a dangerous condition.

The controller 50 is configured to automatically and actively control the valve 26 to move it in the direction of the neutral position (shown in Figure 3A) in response to any one of the pressure parameters exceeding the respective pressure threshold. This allows the pump 24 to pump hydraulic fluid directly to the tank 22 and prevents the pump 24 from pumping further fluid into the actuator 14, avoiding further pressure rise in the hydraulic circuit.

Alternatively, the controller 50 could be configured to automatically and actively control the valve 26 to move it to the retracting position as shown in Figure 3C in response to any one of the pressure parameters exceeding the respective pressure threshold. This allows discharge of fluid from the actuator 14 to lower it, and allows the pump 24 to pump hydraulic fluid directly to the tank 22 to reduce pressure in the hydraulic circuit 20.

In some examples, the pressure threshold corresponding to a sensor may be set to just below the maximum safe pressure at that location so that the maximum pressure is never reached (i.e. in use, just before the maximum threshold is reached, the pressure threshold may be exceeded such that the controller 50 controls the valve 26 to lower the actuator 14 before a dangerous condition occurs).

In some examples, the pressure threshold may relate to a maximum rate of change of pressure in the hydraulic circuit. For example, when the hydraulic cylinder reaches the end of a stroke (a fully extended position), the rate of change of pressure peaks. The controller could therefore monitor signals and their derivatives, i.e. by comparing the current signal to that of a previous time state, it could determine an imminent peak. The controller could therefore actively anticipate peaks in pressure and prevent such peaks from occurring at all.

Using the valve 26 which controls the actuator 14 in normal use, to actively relieve pressure in the hydraulic circuit and/or actuator in response to a pressure threshold being exceeded enables the hydraulic circuit to provide a pressure relief safeguard for when a dangerous condition is detected, without the need for a separate passive pressure relief valve. This makes the whole hydraulic circuit less complex, so that manufacturing of the hydraulic circuit is less expensive.

Further, providing active pressure relief in this manner (rather than passive pressure relief) allows the pressure threshold to be changed merely by changing the software, rather than requiring a new passive pressure relief valve, or requiring other mechanical alterations to a passive pressure relief valve. Therefore, the same hydraulic circuit can be fitted to any tipper.

Furthermore, providing the active pressure relief through the valve 26 of the actuator 14 also allows for quicker pressure relief than previously considered systems, since the actuator channel 28 through which the hydraulic fluid can discharge from the actuator 14 is larger than a channel in a passive pressure relief valve would be.

In addition, providing the active pressure relief through the valve 26 of the actuator 14 also allows for quicker pressure relief than previously considered systems, since the spool of the main valve 26 is directly controlled to prevent further pressure rise, rather than relying on its passive activation using a separate pressure relief valve.

Providing active pressure relief based on signals from sensors located remote from the valve allows the pressure to be monitored at pressure critical locations. With a passive pressure relief valve, the pressure is only relieved when the pressure at the valve exceeds the pressure threshold of the valve. With the hydraulic circuit of the invention, pressure relief can be provided when the pressure at a location remote from the valve (a pressure critical location) exceeds a pressure threshold. Therefore, the hydraulic circuit may provide a safer and more reliable protection against dangerous pressure build-up.

Although it has been described in this example that the valve 26 is a linear valve, in some examples, the valve may be a rotary valve, which is configured to selectively permit communication between the channels as described above, by rotating a spool within a valve channel. In other examples, the valve may comprise a hydraulic manifold with a plurality of cartridge type valves provided within the channels. The cartridge type valves are individually controlled to permit fluidic communication between different channels.

## Claims

1. A hydraulic control system for controlling an actuator in a hydraulic circuit on a tipper truck, the hydraulic control system comprising:
a valve for selectively allowing introduction of hydraulic fluid to the actuator from at least a portion of the hydraulic circuit, and to selectively allow discharge of hydraulic fluid from the actuator into the portion of the hydraulic circuit;
a sensor configured to generate a pressure parameter indicative of the pressure in the hydraulic circuit; and
a controller configured to receive the pressure parameter from the sensor, and to actively control the valve to regulate the flow of hydraulic fluid through the valve in the hydraulic circuit when the pressure parameter exceeds a pressure threshold.

2. A hydraulic control system according to claim 1, wherein the sensor is configured to generate the pressure parameter at a location remote from the valve.

3. A hydraulic control system according to claim 1 or 2, wherein the hydraulic circuit comprises a tank and a pump which draws fluid from the tank, wherein the controller is configured to move the valve between an extending position in which fluid can be actively pumped from the pump to the actuator, a neutral position in which the valve permits fluid to be pumped directly to the tank, and does not permit fluid flow to the actuator, or between the actuator and the tank, and a retracting position in which the valve permits passive discharge of fluid from the actuator to the tank, and permits pumping of fluid directly to the tank.

4. A hydraulic control system according to claim 2 or 3, wherein the sensor is disposed in the actuator to generate a pressure parameter indicative of pressure in the actuator.

5. A hydraulic control system according to any preceding claim, comprising more than one sensor, each sensor being configured to determine a pressure parameter related to the pressure in the hydraulic circuit, wherein the controller is configured to receive a pressure parameter from any or each sensor.

6. A hydraulic control system according to claim 5, wherein the controller is configured to compare the pressure parameter from any or each sensor with a respective pressure threshold, and to regulate the flow of hydraulic fluid through the valve when any one of the pressure parameters from any or each sensor exceeds its respective pressure threshold.

7. A hydraulic control system according to any preceding claim, wherein the sensor is a pressure sensor.

8. A hydraulic control system according to any preceding claim, wherein the sensor is a flow rate sensor, a temperature sensor, a mechanical vibrations sensor or a sound emissions sensor.

9. A hydraulic control system according to any of claims 3-8, wherein the controller is configured to move the valve to a neutral position when it is determined that the pressure threshold is exceeded.

10. A hydraulic control system according to any of claims 1-8, wherein the controller is configured to allow discharge of fluid from the actuator through the valve when it is determined that the pressure threshold is exceeded.

11. A hydraulic control system according to any preceding claim, wherein the pressure threshold corresponds to a maximum pressure in the hydraulic circuit.

12. A hydraulic control system according to claim 1-10, wherein the pressure threshold corresponds to an expected pressure in the hydraulic circuit.

13. A hydraulic control system according to any of claims 1-10, wherein the pressure threshold corresponds to a maximum rate of change of pressure in the hydraulic circuit.

14. A hydraulic circuit comprising the hydraulic control system of any preceding claim.

15. A tipper truck having a hydraulic circuit in accordance with any preceding claim.
